# EUROPÄISCHE PATENTSCHRIFT

(11) **EP 1 765 580 B1**
(45) Veröffentlichungstag und Bekanntmachung des Hinweises auf die Patenterteilung: **24.12.2008**
(21) Anmeldenummer: 05742673.6
(22) Anmeldetag: 18.05.2005
(51) Int. Cl.: B29D 30/20, B29D 30/24, B29D 30/26

(54) **VERFAHREN UND VORRICHTUNG ZUM AUFBAU EINES RADIALREIFENS**
METHOD AND DEVICE FOR THE CONSTRUCTION OF A RADIAL TYRE
PROCEDE ET DISPOSITIF POUR REALISER UN PNEUMATIQUE RADIAL

(30) Priorität: 06.07.2004 DE 102004032508
(43) Veröffentlichungstag der Anmeldung: 28.03.2007
(73) Patentinhaber: Continental Aktiengesellschaft, 30165 Hannover (DE)
(72) Erfinder: LINNE, Stefan, 30900 Wedemark (DE); PAWLIK, Karl-Heinz, 30455 Hannover (DE)
(74) Vertreter: Finger, Karsten
(86) Internationale Anmeldenummer: PCT/EP2005/052272
(87) Internationale Veröffentlichungsnummer: WO 2006/003054

(56) Entgegenhaltungen:
- EP-A- 0 348 336
- US-A1- 2003 041 975
- US-B1- 6 390 166

## Beschreibung

Die Erfindung betrifft ein Verfahren zum Aufbau eines Radialreifens auf einer Reifenaufbaumaschine, welche eine einen zylindrischen Außenumfang aufweisende expandierbare Karkasstrommel und zwei seitlich der Karkasstrommel angeordnete Balgträger mit aufblähbaren Bälgen aufweist, wobei auf die Karkasstrommel eine Reifeninnenseele und eine über die Ränder der Karkasstrommel hinausragende, Überstände aufweisende Karkasseinlage aufgelegt und gespleißt werden, anschließend Wulstkerne mit Kernprofilen positioniert werden und die seitlichen Überstände der Karkasseinlage durch Aufblähen der Bälge um die Außenseiten der Wulstkerne und der Kernprofile geschlagen werden.

Die Erfindung betrifft ferner eine Vorrichtung zum Aufbau eines Radialreifens, welcher eine Innenseele, eine Karkasseinlage, Wulstkerne mit Kernprofilen und um die Wulstkerne geschlagene, Hochschläge bildende Abschnitte der Karkasseinlage aufweist, wobei die Vorrichtung eine eine zylindrische Außenfläche aufweisende, expandierbare Karkasstrommel und zwei seitlich der Karkasstrommel angeordnete Balgträger mit aufblähbaren Bälgen aufweist.

Ein derartiges Verfahren und eine derartige Reifenaufbaumaschine sind beispielsweise aus der US-A-2003/0041975 bekannt.

Es ist üblich, zum Aufbau von Radialreifen einstufige oder zweistufige Reifenaufbaumaschinen zu verwenden. Bekannt sind dabei zweistufige Reifenaufbaumaschinen, die nach dem Finger-Ply-Down-Verfahren oder einem Expansionstrommelverfahren arbeiten. Bei einem zweistufigen Verfahren werden auf der ersten Stufe der Reifenaufbaumaschine auf eine einen zylindrischen Außenumfang aufweisende, expandierbare Karkasstrommel die Innenseele und anschließend die Karkasseinlage aufgelegt und gespleißt. Bei expandierter Trommel werden die Wulstkerne mitsamt Kernprofilen gesetzt. Es folgt der Umschlag der die Karkasstrommel überragenden Überstände der Karkasseinlage um die Wulstkerne und die Kernprofile, was mit Hilfe von aufblähbaren Bälgen durchgeführt wird. Nach dem Auflegen von gegebenenfalls weiteren Reifenbauteilen und dem Auflegen und Anrollen von Seitenwandprofilen ist die Reifenkarkasse fertiggestellt und wird von der nun eingefahrenen Karkasstrommel entfernt. Über eine Transfereinrichtung wird die Reifenkarkasse zu einer zweiten Aufbautrommel transportiert. Auf einer gesonderten Gürteltrommel werden die Gürtellagen zum Gürtelverband komplettiert und anschließend der ein- oder mehrteilige Laufstreifen aufgebracht. Eine Transfereinrichtung transportiert den Gürtel-Laufstreifen-Verband zur Reifenkarkasse und positioniert diesen über der Karkasse. Durch Bombieren der Reifenkarkasse wird diese mit dem Gürtel-Laufstreifen-Verband zusammengefügt und durch Anrollen verbunden. Bei einem Einstufenverfahren erfolgen die Herstellung der Karkasse und die Fertigstellung des Rohreifens durch Komplettieren mit dem Gürtel-Laufstreifen-Verband auf einer einzigen Trommel.

Die seitlich der Karkasstrommel angeordneten Balgträger sind üblicher Weise derart ausgeführt, dass sich die Außenseiten der auf ihnen sitzenden, unaufgeblähten Bälge auf einer zylindrischen Fläche befinden, deren Durchmesser geringer ist als jener der Außenfläche der Karkasstrommel, um die Wulstkerne mitsamt Kernprofilen an definierten Stellen positionieren zu können. Der geringere Durchmesser an den Seiten der von der Karkasstrommel und den Bälgen gebildeten Auflagefläche für die Innenseele und die Karkasseinlage gestattet in diesen Bereichen nur ein punktuelles Unterstützen jener Rollen, die üblicher Weise beim Auflegen und Spleißen dieser Lagen verwendet werden. Es wurde daher versucht, durch ein Anblähen der Bälge eine vorteilhaftere Auflagefläche für die Innenseele und die Karkasseinlage zur Verfügung zu stellen. Die sich dabei ergebende Auflagefläche ist jedoch sehr unregelmäßig und es bildet sich ein großer Spalt zwischen der Karkasstrommel und den Bälgen, sodass die Gefahr des Entstehens von Lufteinschlüssen zwischen der Innenseele und der Karkasseinlage groß ist.

Aus der EP-A-0 348 356 ist eine Gürtelaufbautrommel bekannt, bei welcher zwei aus segmenten bestehende Balgträger radial expandierbar sind.

Der Erfindung liegt die Aufgabe zu Grunde, ein Verfahren und eine Vorrichtung der eingangs genannten Art derart zu verbessern, dass das Auflegen von Reifenbauteilen auf die Karkasstrommel unterstützt wird und ein automatisches Spleißen ihrer Endabschnitte ermöglicht wird.

Was das Verfahren betrifft wird die gestellte Aufgabe erfindungsgemäß dadurch gelöst, dass in radialer Richtung expandierbare Balgträger vorgesehen sind, welche zum Auflegen und Spleißen von Reifenbauteilen derart expandiert werden, dass die Außenflächen der Bälge gemeinsam mit der Außenfläche der expandierten Karkasstrommel zumindest im Wesentlichen eine einheitliche zylindrische Auflagenfläche bilden.

Was die Vorrichtung betrifft wird die gestellte Aufgabe erfindungsgemäß dadurch gelöst, dass die Balgträger in radialer Richtung expandierbar ausgeführt sind.

Vorteilhafte Weiterbildungen der Erfindung sind Gegenstand der betreffenden abhängigen Ansprüche.

Durch ein Vergrößern des Durchmessers durch Expansion der Balgträger kann bei Bedarf erreicht werden, dass die Außenflächen der unaufgeblähten Bälge gemeinsam mit der Außenfläche der Karkasstrommel eine zumindest im Wesentlichen durchgehende zylindrische Oberfläche zum Auflegen und Spleißen von Reifenbauteilen zur Verfügung stellen. Dadurch können Lufteinschlüsse zwischen den einzelnen Bauteilen verhindert werden, die Zykluszeit der Reifenaufbaumaschine kann verkürzt und der Automatisierungsgrad erhöht werden, da die aufgelegten Reifenaufbauteile automatisch und nicht mehr nur händisch gespleißt werden können.

Besonders vorteilhaft ist das Verfahren beim Auflegen der Innenseele und der Karkasseinlage, um ein maschinelles Spleißen zu ermöglichen.

Auch in anderen Verfahrensschritten beim Aufbau des Rohreifens auf der Karkasstrommel kann die Zykluszeit der Reifenaufbaumaschine verkürzt werden. Dies ist beispielsweise dann der Fall, wenn auch die Seitenwandprofile bei expandierten Balgträgern aufgelegt und gespleißt werden.

Die Balgträger können auf einfache, zweckmäßige und funktionssicherer Weise expandierbar ausgeführt werden. Dazu ist insbesondere vorgesehen, dass die Balgträger eine Anzahl von in radialer Richtung aus- und einfahrbaren Segmenten aufweisen, deren Außenflächen gemeinsam eine im Wesentlichen zylindrische Auflage für die Bälge bilden. Die Anzahl der Segmente sollte mindestens vier, insbesondere zwölf, betragen

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Teilquerschnitt durch einen Radialreifen,
Fig. 2a bis 2d Darstellungen von Verfahrensschritten beim Aufbau eines Fahrzeugluftreifens auf einer Reifenaufbaumaschine,
Fig. 3 eine Ansicht auf eines segmentierten Balgträgers und
Fig. 4 einen weiteren Verfahrensschritt beim Aufbau eines Fahrzeugluftreifens auf einer Reifenaufbaumaschine.

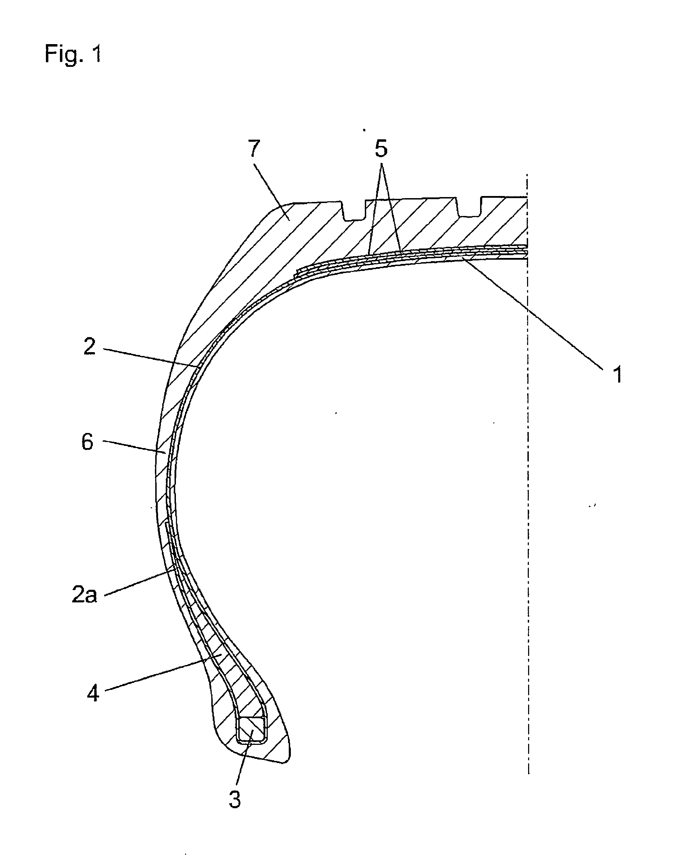

Fig. 1 zeigt beispielhaft einen Teilquerschnitt durch einen Radialreifen für Personenkraftwagen. Dargestellt und bezeichnet sind dabei lediglich die Hauptbestandteile des Reifens, und zwar eine luftdichte Innenseele 1, eine Karkasseinlage 2, Wulstbereiche mit Wulstkernen 3 und Kernprofilen 4, ein Gürtel bestehend aus zwei Gürtellagen 5, ferner Seitenwände 6 und ein profilierter Laufstreifen 7. Die Karkasseinlage 2 eines PKW-Reifens weist üblicherweise in eine Gummimischung eingebettete, insbesondere textile Festigkeitsträger auf, die von Wulstbereich zu Wulstbereich verlaufen und von innen nach außen um die Wulstkerne 4 herumgeführt ist, sodass ihre freien Endabschnitte die sogenannten Hochschläge 2a bilden. Die Karkasseinlage 2 kann auch zweilagig ausgeführt sein. Die Wulstkerne 3 bestehen üblicher Weise aus einer Vielzahl von Stahlseilen, die an sie anschließenden Kernprofile 4 sind Profile aus einer relativ harten Gummimischung. Bei der Herstellung des Reifens bzw. seiner Bauteile werden die Wulstkerne 3 gemeinsam mit den noch unvulkanisierten Kernprofilen 4 als Einheit vorgefertigt. Diese Einheit kann mit einer ein- oder mehrlagigen äußeren Umhüllung aus einem gummierten Gewebe, sogenannten Wulstschutzstreifen, versehen sein.

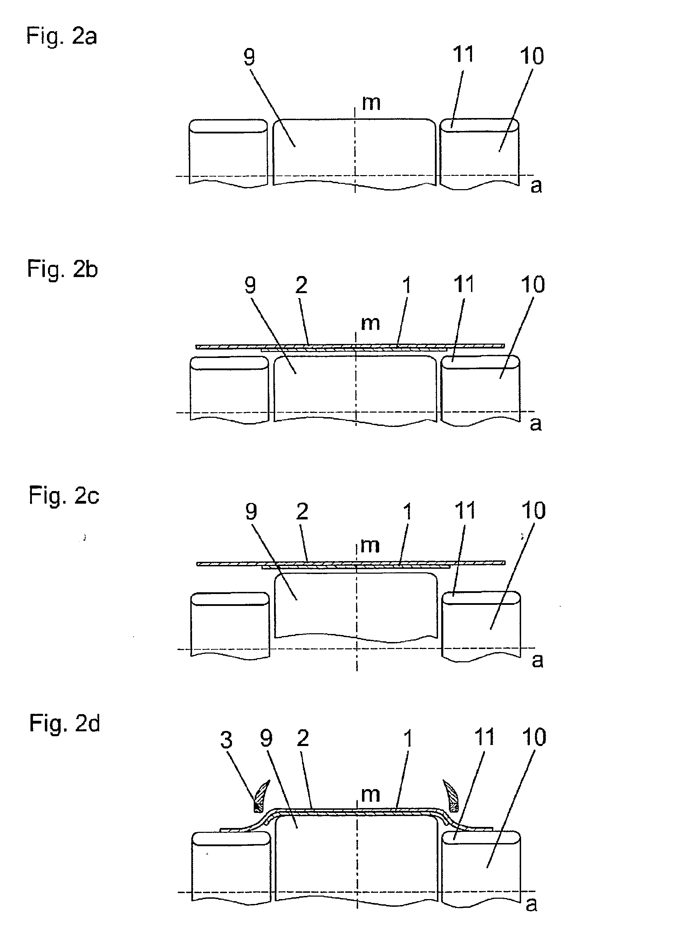

Fig. 2a bis 2d zeigen eine zu einer ersten Stufe einer Reifenaufbaumaschine gehörende, einen zylindrischen Außenumfang aufweisende expandierbare Karkasstrommel 9 und zwei seitlich der Karkasstrommel 9 angeordnete Balgträger 10. Am Außenumfang jedes Balgträgers 10 befindet sich ein aufblähbarer Balg 11. Die strichlierte Linie m verdeutlicht die Symmetrieebene der Karkasstrommel 9, die strichlierte Linie a verdeutlicht die Achse a der Karkasstrommel 9, d.h. unterhalb von a und spiegelbildlich zu a befinden sich die zweiten, nicht dargestellten Hälften der Karkasstrommel 9, der Balgträger 10 und der Bälge 11.

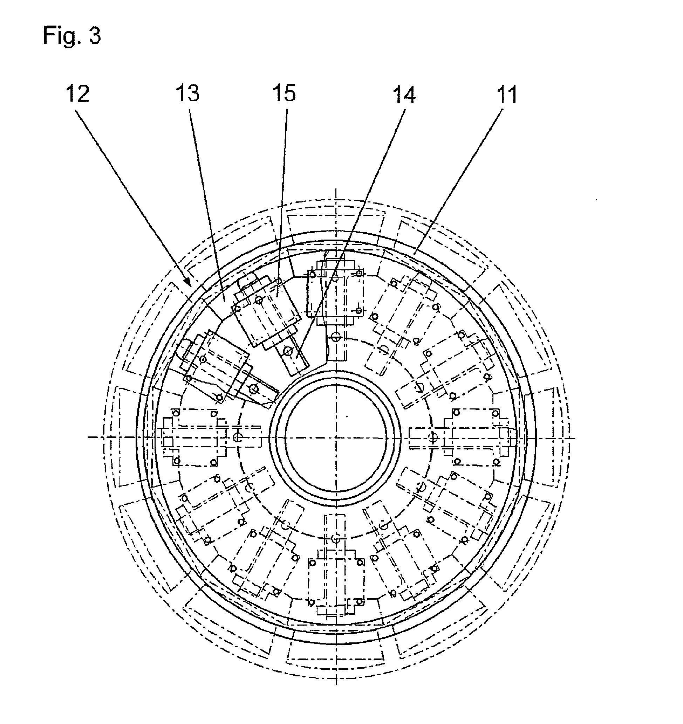

Gemäß der Erfindung sind die Balgträger 10 expandierbar ausgeführt. Wie Fig. 3 zeigt weist dazu der Balgträger 10 in radialer Richtung aus- und einfahrbare Segmente 12 auf. Bei der dargestellten Ausführungsform sind zwölf Segmente 12 gleichmäßig über den Umfang verteilt vorgesehen, welche die über den Umfang des Balgträgers 10 verlaufende Auflage für den Balg 11 zur Verfügung stellen. Jedes Segment 12 besteht aus einem Balgauflageteil 13, einer Führungseinrichtung 14 und einem Träger 15. Die Balgauflageteile 13 sind an den Trägern 15 angeordnet, welche an den Führungen 14 ein- und ausfahrbar gelagert sind. Der dazu vorgesehene Mechanismus kann in sich bekannter Weise ausgeführt sein und beispielsweise auf pneumatische oder hydraulische Weise arbeiten. Fig. 3 zeigt in durchgezogenen Linien die Segmente 12 in ihrer eingefahrenen Lage, mit strichiierten Linien ist die ausgefahrene Stellung eingezeichnet, in welcher der Außenumfang der Balgträger 10 konzentrisch vergrößert ist.

In der in Fig. 2a gezeigten Position sind sowohl die Balgträger 10 als auch die Karkasstrommel 9 bereits expandiert, die im Wesentlichen zylindrischen Außenseiten der nicht aufgeblähten Bälge 11 bilden mit der zylindrischen Außenfläche der Karkasstrommel 9 eine zumindest im Wesentlichen einheitliche zylindrische Auflagefläche. Wie Fig. 2b zeigt sind auf dieser Auflagefläche die Innenseele 1 und die Karkasseinlage 2 aufgelegt. Ihre überlappenden Endabschnitte können durch Anrollen miteinander verbunden (gespleißt) werden. Die expandierten Balgträger 10 unterstützen daher sowohl die Innenseele 1 als auch die Karkasseinlage 2 beim Auflegen und Spleißen und verhindern somit das Entstehen von Lufteinschlüssen zwischen der Innenseele 1 und der Karkasseinlage 2.

Wie Fig. 2c zeigt werden die Segmente 12 der beiden Balgträger 10 nach dem Spleißen der Karkasseinlage 2 und der Innenseele 1 eingefahren, sodass sich der Außendurchmesser der Bälge 11 gegenüber dem Außendurchmesser der Karkasstrommel 9 verringert. Nun können die Wulstkerne 3 mitsamt ihren Kernprofilen 4 auf die Überstände 2a der Karkasseinlage 2 gesetzt werden, wie Fig. 2d zeigt. Nun werden die Bälge 11 aufgebläht, sodass in bekannter Weise ein Umschlagen der Überstände 2a der Karkasseinlage 2 um die Kerne 3 und somit das Herstellen der späteren Karkasshochschläge erfolgt.

Nach dem Umschlagen der Überstände 2a der Karkasseinlage 2 wird aus den Bälgen 11 die Luft entlassen. Durch ein nochmaliges Ausfahren der Segmente 14 können die Außenseiten der Balgträger 10 der wieder unaufgeblähten Bälge 11 auf den Durchmesser der bereits aufgelegten Reifenbauteile gesetzt werden, um eine insgesamt zylindrische Auflagenfläche zum Aufbringen weiterer Reifenbauteile zur Verfügung zu stellen.

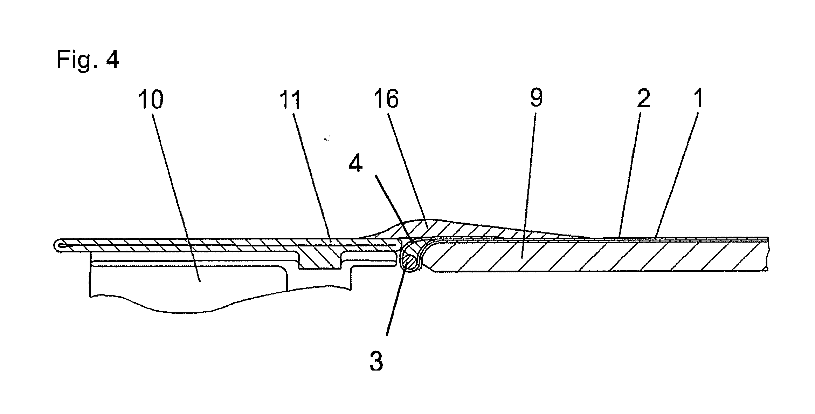

Fig. 4 zeigt dies anhand des Auflegens von Seitenwandprofilen 16. Im Spalt zwischen der Karkasstrommel 9 und den Balgträgern 10 sind die Kerne 3 mit Kernprofilen 4 positioniert. Die beiden Seitenwandprofile 16 können daher über die Kerne 3 und Kernprofile 4 auf eine zumindest im Wesentlichen zylindrische Auflagefläche gelegt werden und auf einfache Weise, beispielsweise mittels Rollen, gespleißt werden.

Auf die mittels der expandierbaren Balgräger 10 erzielbare insgesamt zylindrische Auflagefläche können auch andere Reifenbauteile, beispielsweise Wulstverstärkerstreifen, entsprechend abgestützt aufgelegt und auf komfortable Weise gespleißt werden. Die Erfindung ist dabei sowohl bei zweistufigen als auch bei einstufigen Reifenaufbaumaschinen verwendbar. Die Anzahl der Segmente der Balgträger kann mehr oder weniger als zwölf, mindestens aber vier, sein.

## Patentansprüche

1. Verfahren zum Aufbau eines Radialreifens auf einer Reifenaufbaumaschine, welche eine einen zylindrischen Außenumfang aufweisende expandierbare Karkasstrommel (9) und zwei seitlich der Karkasstrommel (9) angeordnete Balgträger (10) mit aufblähbaren Bälgen (11) aufweist, wobei auf die Karkasstrommel (9) eine Reifeninnenseele (1) und eine über die Ränder der Karkasstrommel (9) hinausragende, Überstände aufweisende Karkasseinlage (2) aufgelegt und gespleißt werden, anschließend Wulstkerne (3) mit Kernprofilen (4) positioniert werden und die Überstände der Karkasseinlage (2) durch Aufblähen der Bälge (11) um die Außenseiten der Wulstkerne (3) geschlagen werden,
**dadurch gekennzeichnet,**
**dass** in radialer Richtung expandierbare Balgträger (10) vorgesehen sind, welche zum Auflegen und Spleißen von Reifenbauteilen derart expandiert werden, dass die Außenflächen der unaufgeblähten Bälge (11) gemeinsam mit der Außenfläche der expandierten Karkasstrommel (9) zumindest im Wesentlichen eine einheitliche zylindrische Auflagefläche bilden.

2. Verfahren nach Anspruch 1, **dadurch gekennzeichnet, dass** die Innenseele (1) bei expandierten Balgträgern (10) aufgelegt und gespleißt wird.

3. Verfahren nach Anspruch 1 oder 2, **dadurch gekennzeichnet, dass** die Karkasseinlage (2) bei expandierten Balgträgern (10) aufgelegt und gespleißt wird.

4. Verfahren nach einem der Ansprüche 1 bis 3, **dadurch gekennzeichnet, dass** Seitenwandprofile (16) bei expandierten Balgträgern aufgelegt und gespleißt werden.

5. Vorrichtung zum Aufbau eines Radialreifens, welcher einer Innenseele (1), eine Karkasseinlage (2), Wulstkerne (3) mit kernprofilen (4) und um die Wulstkerne (3) geschlagene Hochschläge bildende Abschnitte der Karkasseinlage (2) aufweist, wobei die Vorrichtung eine eine zylindrische Außenfläche aufweisende expandierbare Karkasstrommel (9) und zwei seitlich der Karkasstrommel (9) angeordnete Balgträger (10) mit aufblähbaren Bälgen (11) aufweist,
**dadurch gekennzeichnet,**
**dass** die Balgträger (10) in radialer Richtung expandierbar ausgeführt sind.

6. Vorrichtung nach Anspruch 5, **dadurch gekennzeichnet, dass** die Balgträger (10) eine Anzahl von in radialer Richtung aus- und einfahrbaren Segmenten (12) aufweisen, deren Außenflächen gemeinsam eine im Wesentlichen zylindrische Auflage für die Bälge (11) bilden.

7. Vorrichtung nach Anspruch 5 oder 6, **dadurch gekennzeichnet, dass** die Anzahl der Segmente (12) mindestens vier, insbesondere zwölf, beträgt.

## Claims

1. Method for building a radial tyre on a tyre building machine, which has an expandable carcass drum (9), having a cylindrical outer circumference, and two bladder supports (10), arranged to the sides of the carcass drum (9) and having inflatable bladders (11), wherein an inner tyre lining (1) and a carcass insert (2), which protrudes beyond the edges of the carcass drum (9) and has overhangs, are placed on the carcass drum (9) and spliced, bead cores (3) with bead fillers (4) are subsequently positioned and the overhangs of the carcass insert (2) are wrapped around the outer sides of the bead cores (3) by inflating the bladders (11), **characterized in that** bladder supports (10) that are expandable in a radial direction are provided and, for placing and splicing tyre components, they are expanded in such a way that the outer surfaces of the uninflated bladders (11) together with the outer surface of the expanded carcass drum (9) at least substantially form a uniform cylindrical supporting surface.

2. Method according to Claim 1, **characterized in that** the inner lining (1) is placed and spliced with the bladder supports (10) expanded.

3. Method according to Claim 1 or 2, **characterized in that** the carcass insert (2) is placed and spliced with the bladder supports (10) expanded.

4. Method according to one of Claims 1 to 3, **characterized in that** sidewall profiles (16) are placed and spliced with the bladder supports expanded.

5. Device for building a radial tyre which has an inner lining (1), a carcass insert (2), bead cores (3) with core fillers (4) and portions of the carcass insert (3) forming turn-ups wrapped around the bead cores (3), wherein the device has an expandable carcass drum (9), having a cylindrical outer surface, and two bladder supports (10), arranged to the sides of the carcass drum (9) and having inflatable bladders (11), **characterized in that** the bladder supports (10) are made such that they can expand in a radial direction.

6. Device according to Claim 5, **characterized in that** the bladder supports (10) have a number of segments (12) which can be extended and retracted in a radial direction and the outer surfaces of which together form a substantially cylindrical support for the bladders (11).

7. Device according to Claim 5 or 6, **characterized in that** the number of segments (12) is at least four, in particular twelve.

## Revendications

1. Procédé pour construire un pneumatique radial sur une machine de construction de pneumatiques, qui présente un tambour de carcasse (9) extensible présentant une périphérie extérieure cylindrique et deux supports de soufflets (10) disposés latéralement par rapport au tambour de carcasse (9), avec des soufflets gonflables (11), un câble interne de pneumatique (1) et un insert de carcasse (2) qui dépasse au-delà des bords du tambour de carcasse (9) et qui présente des saillies, étant posés et soudés sur le tambour de carcasse (9) puis des tringles (3) avec des profils de tringle (4) étant positionnées et les saillies de l'insert de carcasse (2) étant retournées par gonflage des soufflets (11) autour des côtés extérieurs des tringles (3),
**caractérisé en ce que**
des supports de soufflets (10) extensibles dans la direction radiale sont prévus, lesquels sont étirés pour poser et souder les composants du pneumatique, de telle sorte que les surfaces extérieures des soufflets (11) non gonflés forment conjointement avec la surface extérieure du tambour de carcasse (9) étiré au moins essentiellement une surface d'appui cylindrique unitaire.

2. Procédé selon la revendication 1, **caractérisé en ce que** le câble interne (1) est posé et soudé lorsque les supports de soufflets (10) sont étirés.

3. Procédé selon la revendication 1 ou 2, **caractérisé en ce que** l'insert de carcasse (2) est posé et soudé lorsque les supports de soufflets (10) sont étirés.

4. Procédé selon l'une quelconque des revendications 1 à 3, **caractérisé en ce que** des profils de paroi latérale (16) sont posés et soudés lorsque les supports de soufflets sont étirés.

5. Dispositif pour construire un pneumatique radial, qui présente un câble interne de pneumatique (1), un insert de carcasse (2), des tringles (3) avec des profils de tringle (4) et des portions de l'insert de carcasse (2) formant des revers retournés autour des tringles (3), le dispositif présentant un tambour de carcasse (9) extensible présentant une surface extérieure cylindrique et deux supports de soufflets (10) disposés latéralement par rapport au tambour de carcasse (9), avec des soufflets gonflables (11),
**caractérisé en ce que**
les supports de soufflets (10) sont réalisés de manière extensible dans la direction radiale.

6. Dispositif selon la revendication 5, **caractérisé en ce que** les supports de soufflets (10) présentent un certain nombre de segments (12) pouvant sortir et rentrer dans la direction radiale, dont les surfaces extérieures forment ensemble un appui essentiellement cylindrique pour les soufflets (11).

7. Dispositif selon la revendication 5 ou 6, **caractérisé en ce que** le nombre des segments (12) est d'au moins quatre, en particulier de douze.
